# EUROPEAN PATENT SPECIFICATION

(11) **EP 4 559 661 B1**
(45) Date of publication and mention of the grant of the patent: **30.09.2026**
(21) Application number: 24183547.9
(22) Date of filing: 20.06.2024
(51) Int. Cl.: B29C 55/14, B29C 55/00, B29C 55/02, H01M 50/406, H01M 50/417, H01M 50/491, B01D 67/00, B01D 71/26, B29K 105/04

(54) **PREPARATION METHOD FOR MICROPOROUS FILM**
VERFAHREN ZUR HERSTELLUNG EINES MIKROPORÖSEN FILMS
PROCÉDÉ DE PRÉPARATION DE FILM MICROPOREUX

(30) Priority: 23.11.2023 TW 112145442
(43) Date of publication of application: 28.05.2025
(73) Proprietor: ForeBond Advanced Material Co., Ltd., New Taipei City 231028 (TW)
(72) Inventor: PENG, Tzu-Hung, 231028 New Taipei City (TW); LEE, Kuo-Chen, 231028 New Taipei City (TW)
(74) Representative: Lang, Christian

(56) References cited:
- JP-A- 2017 500 070
- TW-B- I 762 647
- US-A1- 2020 277 465

## Description

### BACKGROUND OF THE INVENTION

### (a) Field of the Invention

The present invention relates to a preparation method for microporous film with application in moisture-permeable and waterproof microporous films or battery pack separators, and in particular a preparation method for microporous film having the required material properties and favorable breathability characteristics using only a uniaxial stretching machine to produce microporous film with the characteristics of microporous film produced using a biaxial stretching machine.

### (b) Description of the Prior Art

In the prior art that addresses novel and/or improved machine direction (MD) and/or transverse direction (TD) stretching methods, and optional calendered films, separators, base films, microporous films, battery pack separators including such separators, base films or membranes, battery packs including such separators, and/or methodological studies of use in producing and/or using such films, separators, base films, microporous films, battery pack separators and/or battery packs, Taiwan Patent No. TWI762647B discloses a novel and/or improved method for producing microporous film and battery pack separators including such microporous films, which compared to microporous films of the prior art has a better balance of desirable characteristics. The method disclosed includes carrying out the following steps: 1. obtaining a non-porous membrane precursor; 2. forming a porous biaxially stretched film precursor from the non-porous membrane precursor; 3. carrying out at least one of the following steps on the porous biaxially stretched precursor: (a) calendering; (b) additional MD stretching; (c) additional TD stretching; and (d) pore filling, to form the final microporous film. Before applying any coating, the microporous film or battery pack separator described in the present invention has a desired balance of the following characteristics: a TD tensile strength greater than 200 or 250 kg/cm2, a puncture strength greater than 200, 250, 300, or 400 gf, and a JIS Gurley greater than 20 or 50 s.

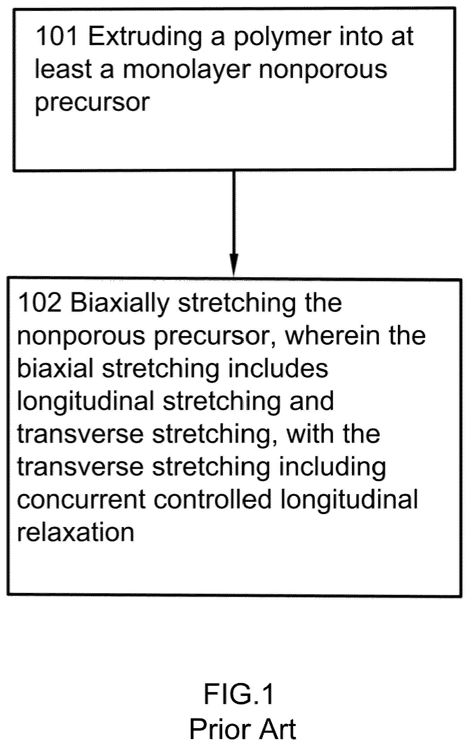

Comparative studies have been conducted in the prior art on at least one selective microporous film produced by a dry stretching process, having substantially circular pores, with a perpendicular tensile strength to horizontal tensile strength ratio in the range from 0.5 to 6.0, such as China Patent No. CN102892534A, which discloses a method for producing the aforementioned microporous film, which includes the following steps: extruding a polymer into a non-porous precursor, and biaxially stretching the nonporous precursor. The biaxial stretching includes longitudinal stretching and transverse stretching, wherein the transverse stretching includes concurrent controlled longitudinal relaxation. The selected embodiments of the invention relate to at least biaxially oriented porous membranes, and composite material including biaxially oriented porous membranes, biaxially oriented microporous membranes, biaxially oriented perforated membranes, battery separators, filter media, humidity control media, flat sheet membranes, liquid retention media, etc. and related methods, manufacturing processes, applications, etc. Referring to Figure 1, which shows a preparation method flow chart for a microporous film of the prior art, wherein a porous film includes: at least one layer of porous polymer film. which is produced through a dry stretching process that includes the following steps: extruding a polymer into at least a monolayer nonporous precursor 101, and then biaxially stretching the nonporous precursor, wherein the biaxial stretching includes longitudinal stretching and transverse stretching, with the transverse stretching including concurrent controlled longitudinal relaxation 102. The microporous film has substantially circular pores, with approximately 40% to 90% porosity, and a longitudinal to transverse tensile strength ratio in the range from approximately 0.5 to 5.0, with a Gurley less than about 100. The average flow pore size of the microporous film is at least approximately 0.04 microns, with an "Aquapore" pore size of at least approximately 0.07 microns, and a water pressure resistance greater than approximately 140psi.

Other prior art studies conducted on microporous films produced by a dry stretching process, which have substantially circular pores, and a longitudinal to transverse tensile strength ratio in the range of 0.5 to 5.0, include U.S. Patent No. US2007/0196638A1, which discloses a preparation method for a microporous film that includes the following steps: extruding a polymer to form a nonporous precursor, and biaxially stretching the nonporous precursor. The biaxial stretching includes longitudinal stretching and transverse stretching, with the transverse stretching including concurrent controlled longitudinal relaxation.

Another prior art study on battery separator films is U.S. Patent No. US2008/0118827A1, which discloses a co-extruded microporous film produced from at least two layers of an extrudable polymer. Moreover, the co-extruded microporous film is provided with: a uniform thickness defined with a standard deviation of <0.80 microns (µm), or has an interlayer adhesion, peel strength >60 grams.

As for research in the prior art regarding packaging film, packaging material using the packaging film, and packaging containers for fresh or fermented foods, China Patent No. CN101309952A discloses packaging film for fresh or fermented food, having an average pore size of 0.01-2µm and 10-80% porosity. Under the conditions whereby the film has no added inorganic compounds or organic compounds for pore formation, a dry stretching method is used to produce a pure crystalline polymer imparted with microporosity without the use of organic solvents or solvents. The packaging film can be used to package fermented foods, such as pickles, and the like, as well as package fresh food, such as vegetables. Through a simple manufacturing process, the packaging film performs a number of functions that allows food packaged therewith to breathe and transpire, while inhibiting the penetration of liquids such as water, effectively preventing a loss in taste and smell, and thereby maintaining freshness of the food.

Another research study in the prior art regarding a method for producing a microporous laminated sheet having a first film layer and a second layer is U.S. Patent No. US6811643B2, which discloses a first film layer containing a pore initiator bonded to a second layer to form a laminated film. At least one transverse stretching machine and at least one longitudinal stretching machine are then used to stretch the laminated film. The patent provides a method for producing a microporous film and microporous laminated sheet, and equipment for use in stretching films or laminated films.

### SUMMARY OF THE INVENTION

The present invention provides a preparation method for microporous film according to claim 1, wherein the method uses dry stretch film technology. In addition, no grease is added to a polymer material for subsequent removal to create pores therein or any pore-forming microparticles that promote the formation of micropores. The methodology steps include: a) a nonporous precursor extrusion process, which involves heating and extruding a semi-crystalline thermoplastic polymer to form a nonporous precursor; b) an annealing and aging process, which involves causing the nonporous precursor to produce a recrystallization phenomenon at a temperature relatively lower than the extrusion temperature, to complete annealing, then taking the film off a roll extrusion production line to be kept aside to complete aging; c) a longitudinal stretching with or without
a transverse relaxation process, which involves stretching the nonporous precursor longitudinally with or without carrying out transverse relaxation from room temperature to a temperature below the melting point of the polymer, to form a longitudinal stretched film; d) a transverse stretching without a longitudinal relaxation process, which involves, starting at a temperature above the glass transition point of the polymer to a temperature below the melting point temperature thereof, carrying out transverse stretching at least once on the longitudinal stretched film without concurrently carrying out longitudinal relaxation; that is, relaxation magnification in the longitudinal direction is 0%, thereby increasing the speed of the longitudinal production line to form a longitudinal/transverse stretched film; e) a transverse relaxation process, which involves, starting at a temperature above the glass transition point of the polymer to a temperature below the melting point temperature thereof, carrying out transverse relaxation at least once on the longitudinal/transverse stretched film to form the microporous film; and f) a winding process, which involves rolling up the microporous film into rolls and storing thereof.

The semi-crystalline thermoplastic polymer in the nonporous precursor extrusion process is polyolefin.

The semi-crystalline thermoplastic polymer in the nonporous precursor extrusion process is polyethylene or polypropylene.

In the annealing and aging process, the nonporous precursor is kept aside for an aging time of more than 3 to 7 days.

Further, in the longitudinal stretching with or without transverse relaxation process, the formed longitudinal stretched film rolled up into rolled material is taken off the production line and kept aside to complete a second aging, which involves keeping aside the rolled material for an aging time of more than 3 to 7 days.

In the longitudinal stretching with or without transverse relaxation process, cold stretching is carried out at an ambient temperature of 0~25°C, or hot stretching is carried out at 10~100°C below the melting point of the polymer.

In the transverse stretching without longitudinal relaxation process, the transverse stretching is carried out at a temperature of 10~100°C below the melting point of the polymer.

In the transverse stretching without longitudinal relaxation process, transverse stretching magnification is 1.1~2.5 fold.

In the transverse relaxation process, relaxation magnification is 2~10%.

The calculated porosity of the microporous film in the winding process is above 50% or below 90%.

The air permeability of the microporous film in the winding process is less than 4 seconds/10cc.

The present invention has the advantage of reducing equipment investment costs by using uniaxial stretching equipment to achieve the effect of biaxial concurrent stretching of porous films, which distinguish and differentiate it from the prior art. The originality, advancement, and practical effectiveness of the present invention are unmistakable. As for the technology and methods used by the present invention and effectiveness thereof, it is believed an in-depth understanding of the aforementioned objects, structure, and characteristics of present invention will be gained after reading the detailed description of the preferred embodiment modes of the present invention in conjunction with the diagrams.

To enable a further understanding of said objectives, structures, characteristics, and effects, as well as the technology and methods used in the present invention and effects achieved, a brief description of the drawings is provided below followed by a detailed description of the preferred embodiments.

### BRIEF DESCRIPTION OF THE DRAWINGS

Figure 1 shows a preparation method flow chart for microporous film of the prior art.
Figure 2 shows a preparation method flow chart for microporous film of the present invention.
Figure 3 shows an electron microscope image of a prepared microporous film with a transverse stretching magnification of 1.5 fold according to the present invention.
Figure 4 shows an electron microscope image of a prepared microporous film with a transverse stretching magnification of 1.75 fold according to the present invention.
Figure 5 shows an electron microscope image of a prepared microporous film with a transverse stretching magnification of 2.0 fold according to the present invention.
Figure 6 shows an electron microscope image of a prepared microporous film with a transverse stretching magnification of 2.25 fold according to the present invention.
Figure 7 shows an electron microscope image of a prepared microporous film with a transverse stretching magnification of 2.5 fold according to the present invention.

### DETAILED DESCRIPTION OF THE PREFERRED EMBODIMENTS

The following description uses specific, concrete examples to describe the embodiment modes of the present invention. Persons skilled in the related art can easily deduce other advantages and effects of the present invention from the content disclosed in the specification. The present invention can also use other different concrete embodiments to clarify its performance and applications. Each detail described in the specification can also be based on a different perspective and application, enabling various types of modifications and alterations to be carried out without deviating from the spirit of the present invention.

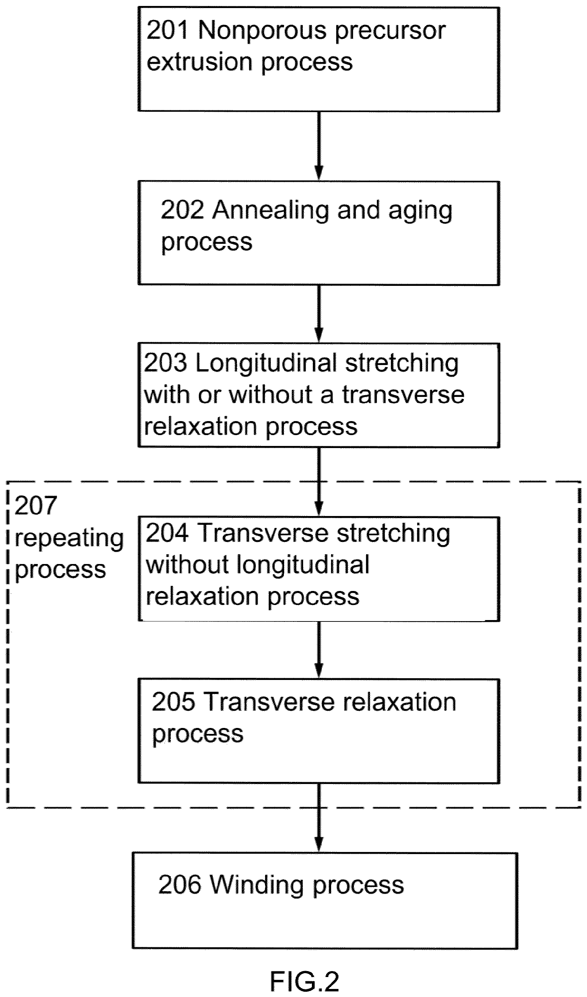

Referring first to Figure 2, which shows a preparation method flow chart for a microporous film of the present invention, wherein the method uses a dry film stretching technology, with no grease being added to a polymer material for subsequent removal to create pores therein or any pore-forming microparticles that promote the formation of micropores. The methodology steps used include: a) a nonporous precursor extrusion process 201, which involves heating and extruding a semi-crystalline thermoplastic polymer to form a nonporous precursor; b) an annealing and aging process 202, which involves causing the nonporous precursor to produce a recrystallization phenomenon at a temperature relatively lower than the extrusion temperature, to complete annealing, then taking the film off a roll extrusion production line to be kept aside to complete aging; c) a longitudinal stretching with or without a transverse relaxation process 203, which involves stretching the nonporous precursor longitudinally with or without carrying out transverse relaxation from room temperature to a temperature below the melting point of the polymer, to form a longitudinal stretched film; d) a transverse stretching without longitudinal relaxation process 204, which involves, starting at a temperature above the glass transition point of the polymer to a temperature below the melting point temperature thereof, carrying out transverse stretching at least once on the longitudinal stretched film without concurrently carrying out longitudinal relaxation, meaning relaxation magnification in the longitudinal direction is 0%; that is, repeating process 207, which involves the manufacturing processes (204 + 205) of the dotted square area as shown in Figure 2; thereby increasing the speed of the longitudinal production line to form a longitudinal/transverse stretched film; e) a transverse relaxation process 205, which involves, starting at a temperature above the glass transition point of the polymer to a temperature below the melting point temperature thereof, carrying out transverse relaxation at least once on the longitudinal/transverse stretched film, to form the microporous film; that is, repeating the process 207, which involves the manufacturing processes (204 + 205) of the dotted square area as shown in Figure 2; and f) a winding process 206, which involves rolling up the microporous film into rolls and storing thereof.

The semi-crystalline thermoplastic polymer in the nonporous precursor extrusion process 201 is polyolefin, or the semi-crystalline thermoplastic polymer in the nonporous precursor extrusion process 201 is polyethylene or polypropylene. In the annealing and aging process 202, the nonporous precursor is kept aside for an aging time of more than 3 to 7 days. Furthermore, in the longitudinal stretching with or without transverse relaxation process 203, the formed longitudinal stretched film rolled up into rolled material is taken off the production line and kept aside to complete a second aging, which involves keeping aside the rolled material for an aging time of more than 3 to 7 days.

In the longitudinal stretching with or without transverse relaxation process 203, cold stretching is carried out at an ambient temperature of 0~25°C, or hot stretching is carried out at 10~100°C below the melting point of the polymer. In the transverse stretching without longitudinal relaxation process 204, the transverse stretching is carried out at a temperature of 10~100°C below the melting point of the polymer. In the transverse stretching without longitudinal relaxation process 204, transverse stretching magnification is 1.1~2.5 fold. In the transverse relaxation process 205, relaxation magnification is 2~10%. According to the ASTM D2873 standard test method, the calculated porosity of the microporous film in the winding process 206 was above 50% or below 90%. According to the ASTM D-726 standard test method, the Gurley 4150 gas permeability tester was used to measure the time required for 100cc of gas to pass through the microporous film, that is, the air permeability (Gurley) value (seconds/10cc) of the microporous film; in which 5 samples were taken from the microporous film to test the air permeability thereof, and the average value of the results was taken as the air permeability of the microporous film. The sample sizes were 25.4mm*25.4mm, and in the winding process 206, the air permeability of the microporous film measured using the Gurley gas permeability tester was less than 4 seconds/10cc.

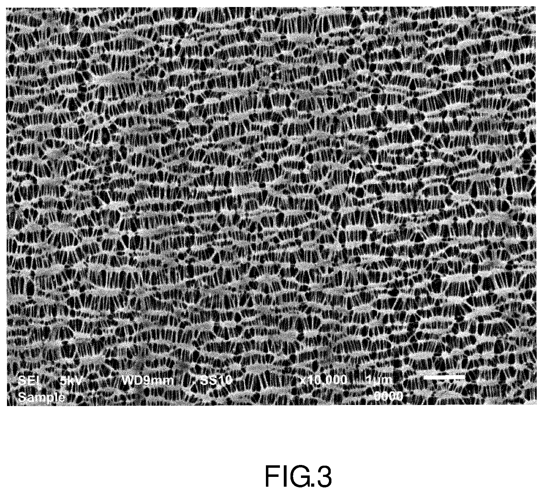

In order for the review committee to further understand an actual finished product of the present invention, Figures 3~7 show electron microscope images of a prepared microporous film with different transverse stretching magnifications according to the present invention, wherein the stretching method uses dry stretch film technology. In addition, no grease is added to the polymer material for subsequent removal to create pores, nor is there any pore-forming microparticles added that promote the formation of micropores. The methodology steps include: 1. the nonporous precursor extrusion process 201, which involves heating and extruding a semi-crystalline thermoplastic polymer to form a nonporous precursor; 2. the annealing and aging process 202, which is carried out at a temperature relatively lower than the extrusion temperature, causing the nonporous precursor to produce a recrystallization phenomenon to complete annealing, after which the rolled up film is taken off the extrusion production line and kept aside to complete aging; 3. the longitudinal stretching with or without transverse relaxation process 203, which involves, starting at room temperature to a temperature below the melting point of the polymer, stretching the nonporous precursor longitudinally with or without carrying out transverse relaxation, to form a longitudinal stretched film; 4. the transverse stretching without longitudinal relaxation process 204, which involves, starting at a temperature above the glass transition point of the polymer to a temperature below the melting point thereof, carrying out transverse stretching at least once on the longitudinal stretched film, without concurrently carrying out longitudinal relaxation, that is, the relaxation magnitude in the longitudinal direction is 0%, thereby increasing the speed of the longitudinal production line to form a longitudinal/transverse stretched film; wherein the transverse stretching magnification in the transverse stretching without longitudinal relaxation process 204 is 1.1 ~ 2.5 fold. 5. the transverse relaxation process 205; which involves, starting at a temperature from above the glass transition point of the polymer to a temperature below the melting point thereof, carrying out transverse relaxation at least once on the longitudinal/transverse stretched film, to form the microporous film; and 6. the winding process 206, which involves rolling up the microporous film into rolls and storing thereof.

The surface pore pattern of the microporous film was viewed under an electron microscope at 10,000 magnification, and the thickness of the film was measured with a thickness meter. The Gurley gas permeability tester was used to measure air permeability, and porosity was calculated according to the ASTM D2873 standard test method.

Figure 3 shows an electron microscope image of a prepared microporous film with a transverse stretching magnification of 1.5 fold according to the present invention, wherein no longitudinal relaxation process is used to produce the microporous film. The bright portions in the image are the surface of the microporous film body; the dark parts are porous areas, and the image shows a uniform micropore size below 1 micron. The thickness of the microporous film prepared with a transverse stretching magnification of 1.5 fold was 11.8 microns, and air permeability was 1.5 seconds/10cc, with 60% porosity.

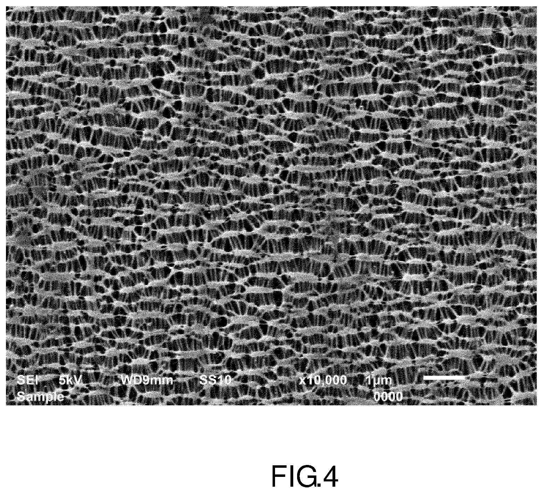

Figure 4 shows an electron microscope image of a prepared microporous film with a transverse stretching magnification of 1.75 fold according to the present invention, and shows a uniform micropore size below 1 micron, The thickness of the microporous film prepared with the transverse stretching magnification of 1.75 fold was 11.7 microns, and air permeability was 1.0 second/10cc, with 64% porosity.

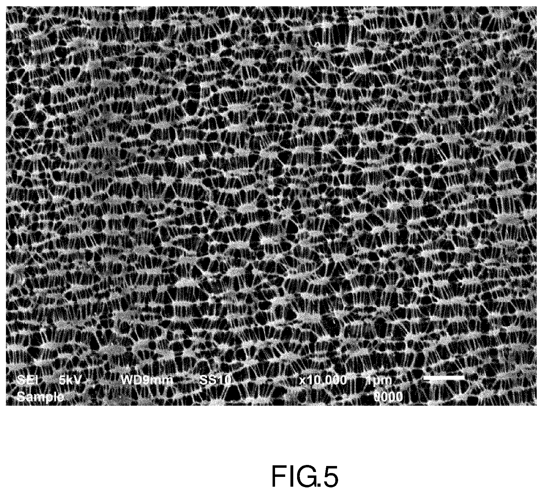

Figure 5 shows an electron microscope image of a prepared microporous film with a transverse stretching magnification of 2.0 fold according to the present invention, and shows a uniform micropore size below 1 micron. The thickness of the microporous film prepared with the transverse stretching magnification of 2.0 fold was 11.6 microns, and air permeability was 0.8 seconds/10cc, with 66% porosity.

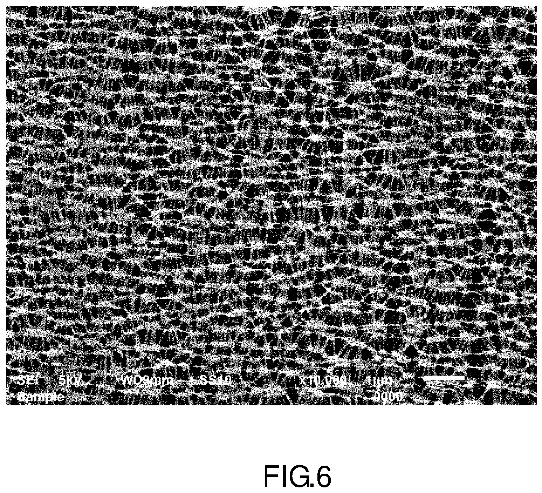

Figure 6 shows an electron microscope image of a prepared microporous film with a transverse stretching magnification of 2.25 fold according to the present invention, and shows a uniform micropore size below 1 micron. The thickness of the microporous film prepared with a transverse stretching magnification of 2.25 fold was 11.5 microns, and air permeability was 0.6 seconds/10cc, with 69% porosity.

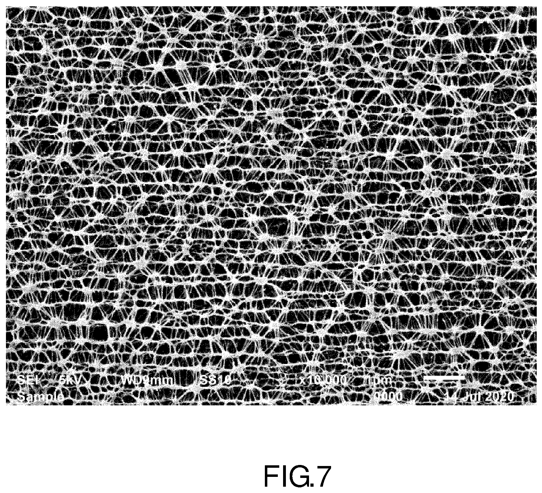

Figure 7 shows an electron microscope image of a prepared microporous film with a transverse stretching magnification of 2.5 fold according to the present invention, and shows a uniform micropore size below 1 micron, The thickness of the microporous film prepared with the transverse stretching magnification of 2.5 fold was 11.3 microns, and air permeability was 0.5 seconds/10cc, with 71% porosity.

The preparation method for microporous film provided by the present invention has the further advantage of reducing equipment investment costs, whereby using a uniaxial stretching equipment the present invention can achieve the effect of biaxial concurrent stretching of porous films. In addition, the preparation method for transverse stretching without longitudinal relaxation process distinguishes and differentiates it from the prior art. The originality, advancement, and practical effectiveness of the present invention are unmistakable, enabling effective improvements on the shortcomings of the prior art, as well as having considerable practicability.

In conclusion, the concrete structures of the embodiments disclosed in the present invention can indeed apply uniaxial stretching equipment to achieve the effect of biaxial concurrent stretching of porous films. Further, the overall structure of the present invention has not been seen in like products; moreover, the contents of this specification have not been publicly disclosed prior to this application, clearly complying with the essential elements as required for a new patent. Accordingly, a patent application is proposed herein.

## Claims

1. A preparation method for microporous film, wherein the method uses a dry film stretching technology, with no grease being added to a polymer material for subsequent removal to create pores therein or any pore-forming microparticles that promote the formation of micropores; the method comprising the following steps:
a) a nonporous precursor extrusion process (201), involving heating and extruding a semi-crystalline thermoplastic polymer to form a nonporous precursor;
b) an annealing and aging process (202), involving causing the nonporous precursor to produce a recrystallization phenomenon at a temperature relatively lower than the extrusion temperature, to complete annealing, then taking the film off a roll extrusion production line to be kept aside to complete aging;
c) a longitudinal stretching with or without transverse relaxation process (203), involving stretching the nonporous precursor longitudinally with or without carrying out transverse relaxation from room temperature to a temperature below the melting point of the polymer, to form a longitudinal stretched film;
d) a transverse stretching without longitudinal relaxation process (204), involving, starting at a temperature above the glass transition point of the polymer to a temperature below the melting point temperature thereof, carrying out transverse stretching at least once on the longitudinal stretched film without concurrently carrying out longitudinal relaxation, relaxation magnification in the longitudinal direction is 0%, to form a longitudinal/transverse stretched film;
e) a transverse relaxation process (205), involving, starting at a temperature above the glass transition point of the polymer to a temperature below the melting point temperature thereof, carrying out transverse relaxation at least once on the longitudinal and/or transverse stretched film, to form the microporous film; and
f) a winding process (206), involving rolling up the microporous film into rolls and storing thereof.

2. The preparation method for microporous film according to claim 1, wherein the semi-crystalline thermoplastic polymer in the nonporous precursor extrusion process (201) is polyolefin.

3. The preparation method for microporous film according to claim 1, wherein the semi-crystalline thermoplastic polymer in the nonporous precursor extrusion process (201) is polyethylene or polypropylene.

4. The preparation method for microporous film according to claim 1, wherein in the annealing and aging process (202), the nonporous precursor is kept aside for an aging time of more than 3 to 7 days.

5. The preparation method for microporous film according to claim 1, wherein further in the longitudinal stretching with or without transverse relaxation process (203), the formed longitudinal stretched film rolled up into rolled material is taken off the production line and kept aside to complete a second aging.

6. The preparation method for microporous film according to claim 5, wherein the second aging involves keeping aside the rolled material for an aging time of more than 3 to 7 days.

7. The preparation method for microporous film according to claim 1, wherein in the longitudinal stretching with or without transverse relaxation process (203), cold stretching is carried out at an ambient temperature of 0~25°C, or hot stretching is carried out at 10~100°C below the melting point of the polymer.

8. The preparation method for microporous film according to claim 1, wherein in the transverse stretching without longitudinal relaxation process (204), the transverse stretching is carried out at a temperature of 10-100°C below the melting point of the polymer.

9. The preparation method for microporous film according to claim 1, wherein in the transverse stretching without longitudinal relaxation process (204), transverse stretching magnification is 1.1 ~ 2.5 fold.

10. The preparation method for microporous film according to claim 1, wherein in the transverse relaxation process (205), relaxation magnification is 2 ~ 10%.

11. The preparation method for microporous film according to claim 1, wherein porosity of the microporous film in the winding process (206) is above 50% or below 90%.

12. The preparation method for microporous film according to claim 1, wherein the air permeability of the microporous film measured in the winding process (206) is less than 4 seconds/10cc.

## Patentansprüche

1. Ein Verfahren zur Herstellung von mikroporösen Folien, wobei das Verfahren eine Trockenfolien-Strecktechnologie verwendet, ohne dass dem Polymermaterial Fett zugesetzt wird, das später entfernt wird, um darin Poren zu bilden, oder porenbildende Mikropartikel, die die Bildung von Mikroporen fördern; wobei das Verfahren die folgenden Schritte umfasst:
a) ein Extrusionsverfahren zur Herstellung eines nichtporösen Vorläufers (201), bei dem ein teilkristallines thermoplastisches Polymer erhitzt und extrudiert wird, um einen nichtporösen Vorläufer zu bilden;
b) ein Temper- und Alterungsprozess (202), bei dem der nichtporöse Vorläufer dazu gebracht wird, bei einer Temperatur, die relativ niedriger ist als die Extrusionstemperatur, eine Rekristallisation zu erzeugen, um den Tempervorgang abzuschließen, woraufhin die Folie von einer Walzextrusionsanlage abgenommen und beiseite gelegt wird, um den Alterungsprozess abzuschließen;
c) ein Längsstrecken mit oder ohne Querentspannung (203), bei der der nichtporöse Vorläufer in Längsrichtung gestreckt wird, mit oder ohne Durchführung einer Querentspannung, von Raumtemperatur auf eine Temperatur unterhalb des Schmelzpunkts des Polymers, um eine längsgestreckte Folie zu bilden;
d) ein Querstrecken ohne Längsentspannung (204), bei dem ausgehend von einer Temperatur oberhalb des Glasübergangspunkts des Polymers bis zu einer Temperatur unterhalb dessen Schmelzpunkt mindestens einmal ein Querstrecken an der längsgestreckten Folie durchgeführt wird, ohne gleichzeitig eine Längsentspannung durchzuführen, wobei die Vergrößerung der Entspannung in Längsrichtung 0% beträgt, um eine längs- und quergestreckte Folie zu bilden;
e) eine Querentspannung (205), bei dem ausgehend von einer Temperatur oberhalb des Glasübergangspunkts des Polymers bis zu einer Temperatur unterhalb dessen Schmelzpunkt mindestens einmal eine Querentspannung an der längs- und/oder quergestreckten Folie durchgeführt wird, um die mikroporöse Folie zu bilden; und
f) ein Wickelvorgang (206), bei dem die mikroporöse Folie zu Rollen aufgewickelt und gelagert wird.

2. Das Verfahren zur Herstellung von mikroporösen Folien nach Anspruch 1, wobei das teilkristalline thermoplastische Polymer im Extrusionsverfahren für nichtporöse Vorprodukte (201) ein Polyolefin ist.

3. Das Verfahren zur Herstellung von mikroporösen Folien nach Anspruch 1, wobei das teilkristalline thermoplastische Polymer im Extrusionsverfahren für nichtporöse Vorprodukte (201) Polyethylen oder Polypropylen ist.

4. Das Verfahren zur Herstellung von mikroporösen Folien nach Anspruch 1, wobei im Rahmen des Temper- und Alterungsprozesses (202) der nichtporöse Vorläufer für eine Alterungszeit von mehr als 3 bis 7 Tagen beiseite gelegt wird.

5. Das Verfahren zur Herstellung von mikroporösen Folien nach Anspruch 1, wobei im weiteren Verlauf des Längsstreckens mit oder ohne Querentspannung (203) die geformte, längsgestreckte Folie, die in Rollen aufgewickelt wurde, von der Produktionslinie genommen und beiseite gelegt wird, um eine zweite Alterung abzuschließen.

6. Das Verfahren zur Herstellung von mikroporösen Folien nach Anspruch 5, wobei bei der zweiten Alterung das gewalzte Material für eine Alterungszeit von mehr als 3 bis 7 Tagen beiseite gelegt wird.

7. Das Verfahren zur Herstellung von mikroporösen Folien nach Anspruch 1, wobei beim Längsstrecken mit oder ohne Querentspannung (203) entweder ein Kaltstrecken bei einer Umgebungstemperatur von 0-25 °C oder ein Heißstrecken bei 10-100 °C unterhalb des Schmelzpunkts des Polymers durchgeführt wird.

8. Das Verfahren zur Herstellung von mikroporösen Folien nach Anspruch 1, wobei beim Verfahren zum Querstrecken ohne Längsentspannung (204) das Querstrecken bei einer Temperatur, die 10-100 °C unter dem Schmelzpunkt des Polymers liegt, erfolgt.

9. Das Verfahren zur Herstellung von mikroporösen Folien nach Anspruch 1, wobei beim Querstrecken ohne Längsentspannung (204) die Vergrößerung durch das Querstrecken das 1,1-2,5-fache beträgt.

10. Das Verfahren zur Herstellung von mikroporösen Folien nach Anspruch 1, wobei bei der Querentspannung (205) die Verstärkung der Entspannung 2-10% beträgt.

11. Das Verfahren zur Herstellung von mikroporösen Folien nach Anspruch 1, wobei die Porosität der mikroporösen Folie im Wickelvorgang (206) über 50% oder unter 90% liegt.

12. Das Verfahren zur Herstellung von mikroporösen Folien nach Anspruch 1, wobei die im Wickelvorgang (206) gemessene Luftdurchlässigkeit der mikroporösen Folie weniger als 4 Sekunden/10 cm³ beträgt.

## Revendications

1. Procédé de préparation pour un film microporeux, dans lequel le procédé utilise une technologie d'étirage de film à sec, sans ajout de graisse à un matériau polymère en vue de son élimination ultérieure pour créer des pores dans celui-ci, ni microparticules porogènes favorisant la formation de micropores ; le procédé comprenant les étapes suivantes :
a) un processus d'extrusion de précurseur non poreux (201), impliquant le chauffage et l'extrusion d'un polymère thermoplastique semi-cristallin pour former un précurseur non poreux ;
b) un processus de recuit et de vieillissement (202), impliquant le fait d'amener le précurseur non poreux à produire un phénomène de recristallisation à une température relativement inférieure à la température d'extrusion, pour achever le recuit, puis le retrait du film d'une ligne de production d'extrusion sur rouleau pour le mettre de côté afin d'achever le vieillissement ;
c) un processus d'étirement longitudinal avec ou sans relaxation transversale (203), impliquant l'étirement longitudinal du précurseur non poreux avec ou sans réalisation d'une relaxation transversale à partir de la température ambiante jusqu'à une température inférieure au point de fusion du polymère, pour former un film étiré longitudinalement ;
d) un processus d'étirement transversal sans relaxation longitudinale (204), impliquant, à partir d'une température supérieure au point de transition vitreuse du polymère et jusqu'à une température inférieure à la température de point de fusion de celui-ci, la réalisation d'au moins un étirement transversal sur le film étiré longitudinalement sans réalisation simultanée d'une relaxation longitudinale, l'amplification de relaxation dans la direction longitudinale est de 0 %, pour former un film étiré longitudinalement/transversalement ;
e) un processus de relaxation transversale (205), impliquant, à partir d'une température supérieure au point de transition vitreuse du polymère jusqu'à une température inférieure à la température de point de fusion de celui-ci, la réalisation d'au moins une relaxation transversale sur le film étiré longitudinalement et/ou transversalement, pour former le film microporeux ; et
f) un processus d'enroulement (206), impliquant l'enroulement du film microporeux en rouleaux et le stockage de ceux-ci.

2. Procédé de préparation pour un film microporeux selon la revendication 1, dans lequel le polymère thermoplastique semi-cristallin lors du processus d'extrusion de précurseur non poreux (201) est une polyoléfine.

3. Procédé de préparation pour un film microporeux selon la revendication 1, dans lequel le polymère thermoplastique semi-cristallin lors du processus d'extrusion de précurseur non poreux (201) est du polyéthylène ou du polypropylène.

4. Procédé de préparation pour un film microporeux selon la revendication 1, dans lequel, lors du processus de recuit et de vieillissement (202), le précurseur non poreux est mis de côté pendant une durée de vieillissement supérieure à 3 à 7 jours.

5. Procédé de préparation pour un film microporeux selon la revendication 1, dans lequel, en outre, lors du processus d'étirement longitudinal avec ou sans relaxation transversale (203), le film étiré longitudinalement formé enroulé en matériau enroulé est retiré de la ligne de production et mis de côté pour achever un second vieillissement.

6. Procédé de préparation pour un film microporeux selon la revendication 5, dans lequel le second vieillissement implique la mise de côté du matériau enroulé pendant une durée de vieillissement supérieure à 3 à 7 jours.

7. Procédé de préparation pour un film microporeux selon la revendication 1, dans lequel, lors du processus d'étirement longitudinal avec ou sans relaxation transversale (203), un étirement à froid est réalisé à une température ambiante de 0~25 °C, ou un étirement à chaud est réalisé à 10~100 °C en dessous du point de fusion du polymère.

8. Procédé de préparation pour un film microporeux selon la revendication 1, dans lequel, lors du processus d'étirement transversal sans relaxation longitudinale (204), l'étirement transversal est réalisé à une température de 10~100 °C en dessous du point de fusion du polymère.

9. Procédé de préparation pour un film microporeux selon la revendication 1, dans lequel, lors du processus d'étirement transversal sans relaxation longitudinale (204), l'amplification d'étirement transversal est de 1,1~2,5 fois.

10. Procédé de préparation pour un film microporeux selon la revendication 1, dans lequel, lors du processus de relaxation transversale (205), l'amplification de relaxation est de 2~10 %.

11. Procédé de préparation pour un film microporeux selon la revendication 1, dans lequel la porosité du film microporeux lors du processus d'enroulement (206) est supérieure à 50 % ou inférieure à 90 %.

12. Procédé de préparation pour un film microporeux selon la revendication 1, dans lequel la perméabilité à l'air du film microporeux mesurée lors du processus d'enroulement (206) est inférieure à 4 secondes/10 cc.
